# EUROPÄISCHE PATENTSCHRIFT

(11) **EP 1 974 150 B1**
(45) Veröffentlichungstag und Bekanntmachung des Hinweises auf die Patenterteilung: **18.06.2014**
(21) Anmeldenummer: 07718281.4
(22) Anmeldetag: 18.01.2007
(51) Int. Cl.: F16D 55/00

(54) **SCHEIBENBREMSE**
DISK BRAKE
FREIN À DISQUE

(30) Priorität: 18.01.2006 DE 102006002569
(43) Veröffentlichungstag der Anmeldung: 01.10.2008
(60) Teilanmeldung: 14167148.7
(73) Patentinhaber: BPW Bergische Achsen KG, 51674 Wiehl (DE)
(72) Erfinder: DOWE, Günter, 51588 Nümbrecht (DE); PEHLE, Michael, 51371 Leverkusen (DE); KLAAS, Thomas, 51590 Reichshof (DE); JANZEN, Hartmut, 51674 Wiehl (DE)
(74) Vertreter: Christophersen, Ulrich Rudolf
(86) Internationale Anmeldenummer: PCT/DE2007/000115
(87) Internationale Veröffentlichungsnummer: WO 2007/082520

(56) Entgegenhaltungen:
- EP-A- 1 234 996
- EP-A1- 0 665 387
- DE-A1- 1 630 140
- DE-A1- 2 852 277
- DE-A1- 3 634 218
- DE-A1- 19 857 074
- FR-A- 1 309 863
- US-A- 3 194 351
- US-A- 3 907 081

## Beschreibung

Die Erfindung betrifft eine Scheibenbremse mit einem gegenüber einem Achskörper fest angeordneten Bremsträger mit daran angeordneten Aufnahmeelementen für die Befestigung und schwimmende Lagerung eines Bremssattels.

Eine Scheibenbremse dieser Art ist als Gleitsattel-Scheibenbremse aus der DE 40 36 272 A1 bekannt. Der Bremsträger, welcher den Bremssattel mit dem Achskörper verbindet, setzt sich aus zwei getrennten, zu beiden Seiten der Bremsscheibe angeordneten Bremsträgerteilen zusammen, die lösbar miteinander verbunden sind. Nur eines der beiden Bremsträgerteile ist mit dem Achskörper verschweißt. Die Bremspads der Scheibenbremse befinden sich in Bremsbelagschächten der beiden Bremsträgerteile, und sind an Führungsflächen der Bremsbelagschächte abgestützt. Die Montage dieser Scheibenbremse an einem Achskörper muss in zwei aufeinander folgenden Schritten erfolgen. In einem ersten Schritt muss an dem ersten, direkt an den Achskörper angeschweißten Bremsträgerteil das zweite Bremsträgerteil angeschraubt werden. In einem zweiten Schritt muss sodann der Bremssattel aufgesetzt und mit dem ersten Bremsträgerteil verschraubt werden.

Eine Scheibenbremse mit den Merkmalen des Oberbegriffs ist aus der DE 198 57 074 A1 bekannt. Bei der ersten darin beschriebenen Ausführungsformen ist der Bremsträger baulich stark reduziert, indem nur der innere Bremsbelag im Bremsträger gehalten und geführt wird, hingegen der äußere Bremsbelag in dem Bremssattel. Die durch den äußeren Bremsbelag aufgenommenen Bremsmoment müssen daher auf den Bremsträger übertragen werden. Der Bremssattel ist hierzu als Schiebesattel mit Schiebeführungselementen ausgebildet, die sich an korrespondierenden Schiebeführungselementen des Bremsträgers ähnlich einer Kulissenführung abstützen. Zur Bereitstellung der Schiebeführungselemente ist der Bremsträger mit Stützarmen versehen, die sich nach außen bis über die Bremsscheibe hinüber erstrecken. Die Stützarme führen, da sie einteiliger Bestandteil des Bremsträgers sind, zu einem weiterhin hohen Gewicht des Bremsträgers.

Bei der Gleitsattel-Scheibenbremse aus der DE 2 015 774 ist der an einem Fahrzeugteil befestigte Bremsträger L-förmig gestaltet und setzt sich aus einem vertikalen Plattenabschnitt und einem horizontalen Plattenabschnitt zusammen. Der horizontale Abschnitt dient zugleich der Gleitlagerung, d. h. der schwimmenden Lagerung des Bremssattels, in dem wiederum die beiden Bremspads der Scheibenbremse geführt sind.

Ziel der Erfindung ist eine an einem Achskörper montierbare Scheibenbremse, die sich aus wenigen Einzelteilen zusammensetzt, in wenigen Montageschritten zusammensetzbar ist, und im Verschleißfall wartungsfreundlich ist.

Dazu wird eine Scheibenbremse mit den in Anspruch 1 angegebenen Merkmalen vorgeschlagen.

Bei einer üblicherweise zwei Bremsbeläge, d.h. Bremspads aufweisenden Scheibenbremse ist der eine Bremspad in einem Belagschacht angeordnet, welcher Bestandteil des den Bremssattel mit dem Achskörper verbindenden Bremsträgers ist, wohingegen der weitere oder jeder weitere Bremsbelag, d.h. Bremspad nicht an dem Bremsträger oder einem Teil des Bremsträgers angeordnet ist, sondern sich in einer Aufnahme des Bremssattels befindet. Zu diesem Zweck kann der Bremssattel mit einem Belagschacht mit daran angeordneten Führungsflächen zur radialen und tangentialen Führung des weiteren Bremspads versehen sein.

Die erfindungsgemäße Scheibenbremse lässt sich in wenigen Schritten montieren. Der Bremsträger wird direkt an dem Achskörper befestigt, vorzugsweise durch die für solche Verbindungen übliche Schweißverbindung. Danach muss nur noch der Bremssattel an den Bremsträger angesetzt und mit diesem verbunden werden. Weitere Montageschritte wie zum Beispiel die Montage weiterer Bremsträgerteile sind nicht erforderlich. Die erfindungsgemäße Scheibenbremse kommt daher mit einer geringen Teileanzahl aus.

Bevorzugte Ausgestaltungen und Ausführungsbeispiele der erfindungsgemäßen Scheibenbremse sind in den Unteransprüchen definiert.

Desweiteren werden einige Ausführungsbeispiele der Erfindung nachfolgend anhand der zugehörigen Zeichnungen erläutert. Darin zeigen:
- Fig. 1: In einer perspektivischen Darstellung den Achskörper einer nicht angetriebenen Fahrzeugachse mit daran angeschweißten Bremsträgern;
- Fig. 2: Eine Draufsicht auf das eine Ende des Achskörpers entsprechend dem Ansichtspfeit II in Fig. 1;
- Fig. 3: Eine Schnittdarstellung entsprechend der in Fig. 1 markierten Schnittebene III-III;
- Fig. 4: Eine gegenüber Fig. 3 geänderte Ausführungsform unter Verwendung eines zweiteiligen Bremsträgers;
- Fig. 5: Einen Bremsträger in einer weiteren Ausführungsform, hier jedoch ohne Darstellung des Achskörpers der Fahrzeugachse;
- Fig. 6: Einen Schnitt durch den Bremsträger sowie eine darin eingesetzte Gewindebuchse entsprechend der in Fig. 5 markierten Schnittebene VI-VI;
- Fig. 7: Einen Schnitt durch den Bremsträger und eine darin eingesetzte Gewindebuchse entsprechend der in Fig. 5 markierten Schnittebene VII-VII;
- Fig. 8: In einer weiteren Ausfuhrungsvariante einen Schnitt durch einen Bremsträger und ein dann eingeschraubtes Aufnahmeelement für einen Bremssattel,
- Fig. 9a: Eine stark vereinfachte Teilansicht des Bremsträgers mit dem daran befestigten Bremssattel der Scheibenbremse;
- Fig. 9b: Die Gegenstände nach Fig 9a während der Demontage des Bremssattels von dem Bremsträger,
- Fig. 9c: Die Gegenstände nach den Fign 9a und 9b nach abgeschlossener Demontage des Bremssattels von dem Bremsträger,
- Fig. 10: Eine Explosionsdarstellung der in Fig. 9a mit X zusammengefassten Gegenstände zwecks Erläuterung der Demontierbarkeit des Bremssattels;
- Fig. 11: In perspektivischer, vergrößerter Darstellung ein Verschleißblech zum Einsetzen in einen Belagschacht des Bremsträgers und
- Fig 12: Eine weitere Ausführungsform von Verschleißblechen zum Einsetzen in einen Belagschacht des Bremsträgers.

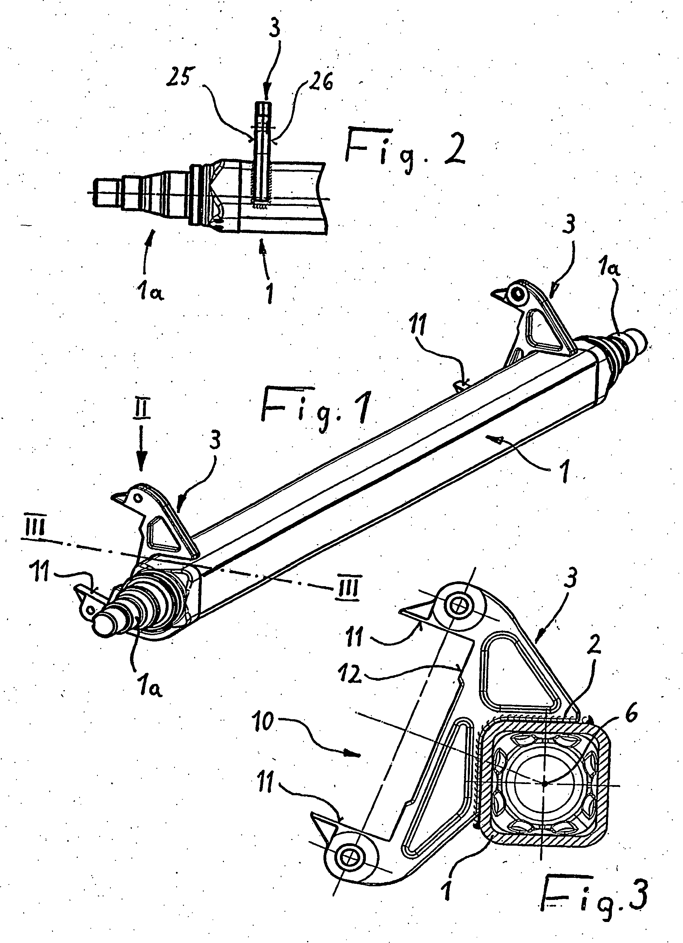

In Fig. 1 ist in perspektivischer Gesamtdarstellung eine Fahrzeugachse dargestellt Diese findet Verwendung vor allem als nicht-angetriebene Achse für Schwerlastfahrzeuge, z B. für Lkw-Anhänger. Nahe den beiden Enden eines langgestreckten Achskörpers 1, der aus einem Achsrohr mit quadratischem, an den Kanten abgerundetem Querschnitt und zwei Achsschenkeln 1a besteht, sind Bremsträger 3 angeschweißt Die Bremsträger 3 bilden gemeinsam mit emem in Fig. 1 nicht dargestellten Bremssattel sowie einer ebenfalls nicht dargestellten Bremsscheibe eine Scheibenbremse. Die Achsschenkel 1a des Achskörpers nehmen die Wälzlagerungen für die Nabe sowie die Bremsscheibe des jeweiligen Fahrzeugrades auf.

Anhand der Fig. 3 werden nun Einzelheiten des Bremsträgers 3 sowie dessen Anordnung an dem Achskörper 1 beschrieben. Die Verbindung erfolgt beim Ausführungsbeispiel durch Verschweißen des Bremsträgers 3 mit dem hier quadratisch gestalteten Achsrohr des Achskörpers 1 entlang der Schweißnaht 2 Die Schweißnaht 2 erstreckt sich entlang eines ersten, horizontalen Schweißnahtabschnittes sowie eines hierzu rechtwinkligen, zweiten Schweißnahtäbschnittes. Dargestellt ist insoweit eine durchgehende Schweißverbindung. Zur Vermeidung von Spannungsspitzen kann es jedoch von Vorteil sein, die Verschweißung im Bereich der Rundung des Achsrohrs abzusetzen, d.h. im Fall der Fig. 3 zwei getrennte Schweißnähte 2 zu ziehen. Auf der anderen Seite des sich quer zum Achskörper 1 erstreckenden Bremsträgers 3 befindet sich eine entsprechende gestaltete Schweißnaht bzw. entsprechende Schweißnähte.

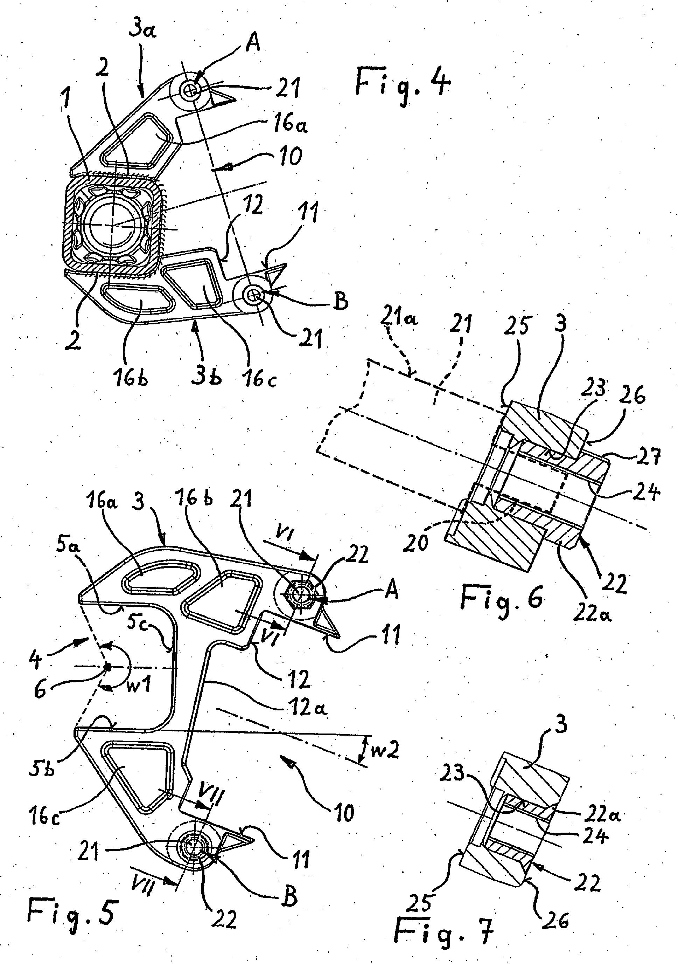

Eine Alternative zeigt Fig. 4. Denn während der Bremsträger bei Fig. 3 einstückig ist, zeigt Fig. 4 zwei getrennte, aber in derselben Ebene quer zum Achskörper angeordnete Bremsträgerteile 3a, 3b. Das eine Bremsträgerteil 3a ist mit einer Seite des Achskörpers 1 verschweißt, das andere Bremsträgerteil 3b vor allem mit der dazu abgewandten Seite.

Zur Gewichtseinsparung ist der Bremsträger 3 bzw. sind die Bremsträgerteile 3a, 3b mit Ausnehmungen 16a, 16b, 16c auf einer oder auf beiden Flachseiten versehen. Anstelle der Ausnehmungen können sich dort auch, soweit die Materialstabilität des Bremsträgers dies zulässt, Öffnungen befinden.

In Fig. 5 ist eine weitere Variante eines erfindungsgemäßen Bremsträgers 3 dargestellt, hier jedoch ohne das Achsrohr. Zu erkennen ist, dass die Öffnung 4, mit der der Bremsträger 3 auf den Achskörper aufgesetzt ist, maufförmig oder U-förmig gestaltet ist, so dass an der Öffnung 4 insgesamt drei Flächen 5a, 5b, 5c für die Schweißverbindung mit dem Achskörper zur Verfügung stehen. Infolge der maulförmigen Gestaltung der Öffnung 4 ergibt sich ein großer Umschließungswinkel w1 in Bezug auf die Mittelachse 6 des Achskörpers. Der Umschließungswinkel w1 beträgt aus Gründen der Gewichtseinsparung weniger als 300°, und bei dem Ausführungsbeispiel nach Fig. 5 nur ca. 270°. Aber selbst dieser Umschließungswinkel lässt es noch zu, den Bremsträger 3 zwecks anschließender Verbindung mit dem Achskörper 1 von der Seite her auf den hier quadratischen Achskörper aufzusetzen, was die Herstellung der Einheit aus Achskörper und Bremsträgern bei der Schweißmontage vereinfacht. Alternativ ist - allerdings unter Verlust des Gewichtsvorteils - auch eine vollständige Umschließung des Achskörpers möglich.

An dem Bremsträger 3 ist einstückig ein Belagschacht 10 für einen Bremsbelag der Scheibenbremse ausgebildet. Der Belagschacht 10 ist von rechteckigem Querschnitt und ist nach Art eines Mauls nach außen hin offen, so dass sich der Bremspad von außen her in den Schacht 10 einsetzen lässt. Um den Bremspad beim Bremsen in dem Belagschacht 10 abzustützen und in Achsrichtung beweglich zu führen, befinden sich an den Innenflächen des Belagschachts 10 entsprechende Führungsflächen. Diese können, wie bei Fig 5, unmittelbar an dem Bremsträger 3 angeformt sein, wobei die Oberflächen gehärtet sein sollten. Oder aber die Führungsflächen können sich an separaten, austauschbaren Einsätzen oder an Verschleißblechen befinden, die ihrerseits zunächst in oder an dem Belagschacht fixiert werden Geeignete Verschleißbleche werden nachfolgend anhand der Fign, 11 und 12 erläutert werden

Die Führungsflächen setzen sich aus radialen und tangentialen Führungsflächen 11, 12 für den Bremspad zusammen Die zwei radialen Führungsflächen 11 des Belagschachts 10 verlaufen parallel zueinander, und tangentiale Führungsflächen 12 erstrecken sich rechtwinklig zu den radialen Führungsflächen 11. In diesem Zusammenhang ist der Begriff der "radialen" Führungsfläche nicht streng geometrisch zu verstehen. Gemeint sind vielmehr jene Führungsflächen 11, an denen sich der Bremspad beim Bremsvorgang in Umfangsnchtung abstützt und an denen daher in erster Linie die Bremskräfte auftreten. Entsprechend ist die tangentiale Führungsfläche 12 jene Fläche, an der der Bremspad mit seinem Innenrand anliegt. Die tangentiale Führungsfläche 12 für den Bremspad ist beim Ausführungsbeispiel zweigeteilt und wird, um Material und Gewicht zu sparen, durch eine Einsenkung 12a unterbrochen

Die Öffnung 4 zur Aufnahme des Achskörpers einerseits und der Belagschacht 10 für den Bremspad andererseits sind geringfügig in der Weise zueinander verdreht, dass die einander gegenüberliegenden Flächen 5a, 5b der Öffnung 4 schräg, d.h. unter einem Winkel w2, zu den Führungsflächen 11 des Belagschachts 10 angeordnet sind. Der Winkel w2 beträgt zwischen 10 und 30°, vorzugsweise 20°

Der Bremsträger 3 in seiner einstückigen Ausführung (Fign. 3 und 5) bzw. in seiner zweistückigen Ausführung (Fig. 4) ist als flache Platte mit einer Dicke von z.B. 3 cm gestaltet Er kann z B als Stahlgussteil gefertigt werden, wobei sich die gewichtsreduzierenden Ausnehmungen 16a, 16b, 16c beim Gießen ergeben Alternativ lässt sich der Bremsträger 3 durch Schmieden, oder durch Konturfräsen einer Platte und vorzugsweise einer Stahlplatte herstellen. Ebenso ist es möglich, den Bremsträger 3 aus mehreren parallel geschichteten und entsprechend dünneren Platten zusammenzusetzen. In diesem Fall lassen sich die Ausnehmungen 16a, 16b, 16c besonders einfach dadurch herstellen, dass einzelne der so geschichteten Platten an den Orten der Ausnehmungen Öffnungen aufweisen.

An den zu beiden Seiten des Belagschachts 10 angeordneten Orten A und B befinden sich die im Folgenden näher erläuterten Aufnahmeelemente für die Befestigung und gegebenenfalls Führung des die Bremsscheibe der Scheibenbremse übergreifenden Bremssattels. Die Befestigung des Bremssattels erfolgt bei dem dargestellten Ausführungsbeispiel nicht starr sondern gleitbeweglich, da die beschriebene Scheibenbremse eine Gleit- oder Schwimmsattelscheibenbremse ist. Der parallel zu dem Achskörper schwimmend an dem Bremsträger 3 gelagerte Bremssattel ist mit einer hydraulischen, pneumatischen oder elektrischen Betätigungseinrichtung zur Zustellung der Bremspads gegen die zwischen den Bremspads angeordnete Bremsscheibe versehen. Der eine Bremspad ist, wie oben bereits beschrieben, in dem Belagschacht 10 aufgenommen und darin geführt. Der andere oder auch etwaige andere Bremspads sind hingegen in einem Belagschacht des Bremssattels aufgenommen und darin geführt.

Der schwimmenden Lagerung des Bremssattels dienen Aufnahmeelemente 21, die in Gestalt von Führungszapfen an den mit A und B bezeichneten Orten an dem Bremsträger 3 befestigt sind. Hierzu können die mit einem Außengewinde 20 versehenen Aufnahmeelemente 21, auf deren zylindrischer Lagerfläche 21a der Bremssattel in Achskörper-Längsrichtung gleiten kann, in eine separate Gewindebuchse 22 eingeschraubt sein. Die Gewindebuchse 22 ihrerseits kann mittels eines leichten Presssitzes in eine Bohrung 23 des Bremsträgers 3 eingesetzt sein. Der Vorteil der zusätzlichen Gewindebuchse liegt in der einfachen Austauschbarkeit im Falle z.B. eines Verschleißes der zylindrischen Aufnahmeelemente. Es ist dann nicht erforderlich, den teuren Bremsträger zu tauschen.

Eine erste Ausführungsform für die Aufnahme des Bremssattels ist in Fig. 6 dargestellt. In der Bohrung 23 des, Bremsträgers 3 sitzt die mit einem Innengewinde 24 versehene Gewindebuchse 22. Die Gewindebuchse 22 ist an ihrem einen Ende mit einem radial erweiterten Kragen 22a versehen. Mit dem Kragen 22a stützt sich die Gewindebuchse 22 gegen die Flachseite 25 des Bremsträgers 3 oder eine dortige Einsenkung ab. Von der anderen Seite her ist der in Fig. 6 gestrichelt eingezeichnete Führungszapfen 21 in das Innengewinde 24 der Gewindebuchse 22 eingeschraubt. Hierbei stützt sich der Führungszapfen 21 gegen die andere Flachseite 26 des Bremsträgers 3 oder eine dortige Einsenkung ab. Der Führungszapfen 21 stützt sich daher von der einen, und die Buchse 22 von der anderen Seite her gegen den Bremsträger 3 ab, wodurch eine einfache jedoch eindeutige Fixierung erreicht wird. Für das Einsetzen der Gewindebuchse 22 in die Bohrung 23 ist es von Vorteil, die Gewindebuchse, z.B. im Bereich des Kragens 22a, mit einem maschinell gut greifbaren Mehrkant 27 zu versehen.

Fig. 7 zeigt für die Schnittebene VII-VII der Fig. 5 eine alternative Ausführungsform der Gewindebuchse 22. Diese ist in der Flachseite 25 des Bremsträgers 3 versenkt, und mit einem 45°-Kragen 22a versehen.

Die Aufnahmeelemente nach den Fign. 6 und 7 sind jeweils so gestaltet, dass sich die Gewindebuchse 22 jeweils nur von einer Seite her in die Bohrung 23 des Bremsträgers 3 einsetzen lässt. Möglich ist jedoch auch eine Ausgestaltung mit durchgehender Bohrung 23 dergestalt, dass sich die Gewindebuchse wahlweise von der einen oder der anderen Seite her darin einsetzen lässt. Dies hat den Vorteil, dass sich ein- und derselbe Bremsträger 3 wahlweise an dem einen oder dem anderen Ende des Achskörpers 1 anschweißen lässt, da beide Bremsträger identisch gestaltet sind. Auf diese Weise lassen sich die Produktionskosten weiter senken.

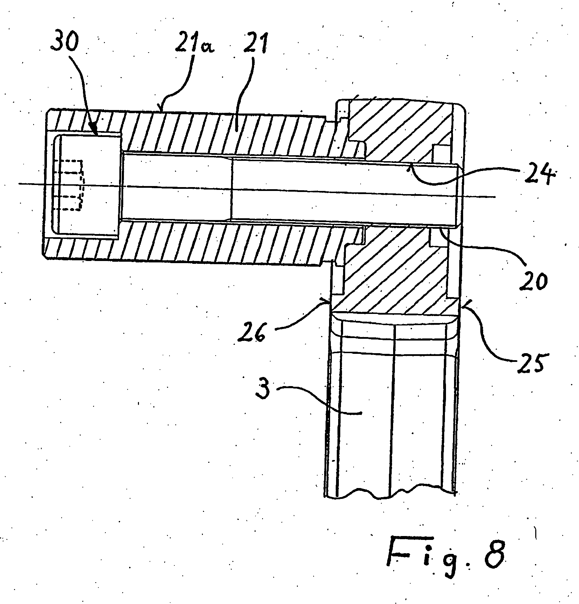

Auch die Ausführungsform nach Fig. 8 verwendet eine symmetrische Gestaltung der Bohrung 23 in dem Bremsträger 3. Auch bei dieser Ausgestaltung, welche ohne die zusätzliche Buchse auskommt, lässt sich der zylindrische Führungszapfen 21 für den Bremssattel wahlweise von der einen, oder von der anderen Seite her an den Bremsträger 3 ansetzen. Dies hat wiederum den Vorteil, dass sich ein- und derselbe Bremsträger 3 wahlweise an dem einen oder dem anderen Ende des Achskörpers 1 befestigen lässt, da beide Bremsträger identisch gestaltet sind. Die Produktionskosten lassen sich so senken. Für die Befestigung des Führungszapfens 21 ist darin eine lange Schraube 30 vorgesehen, deren Gewinde 20 in das Innengewinde 24 greift. Das Innengewinde 24 befindet sich hier unmittelbar im Material des Bremsträgers.

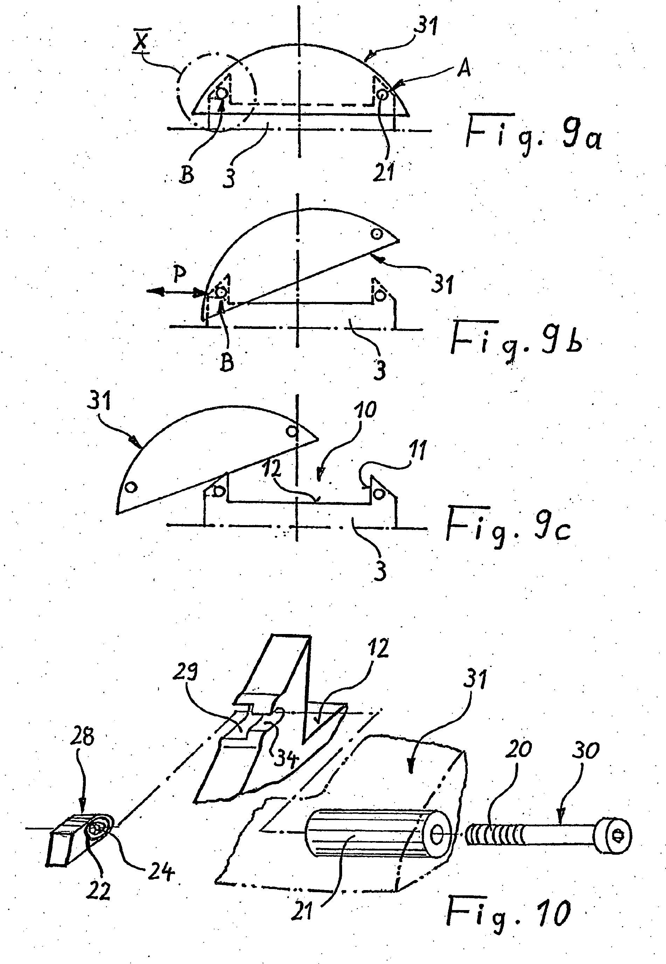

In den Fign. 9a bis 10 ist eine weitere Möglichkeit zur Befestigung des Bremssattels 31 an dem Bremsträger 3 dargestellt. Anstelle der Verwendung zweier runder Gewindebuchsen (Gewindebuchsen 22 gemäß den Fign. 6 und 7) befindet sich in dem einen Fall das Innengewinde 24 nicht in einer Buchse sondern in einem Kulissenstein 28. Dieser ist von der Seite her in eine entsprechende Kulisse 29 des Bremsträgers 3 einschiebbar. Das Einschieben bzw. Herausziehen des Kulissensteins 28 in bzw. aus der Kulisse 29 erfolgt in Richtung des Pfeils P parallel zur Erstreckung des Bremsträgers 3. In Fig. 10 ist nach Art einer Explosionsdarstellung zusätzlich der auch hier durch eine lange Schraube 30 gesicherte Führungszapfen 21 dargestellt, auf dem der Bremssattel 31 schwimmend gelagert list. Neben der Kulisse 29 befindet sich ein Durchtritt 34 für jenen Längsabschnitt der Schraube 30, der sich zwischen dem Kulissenstein 28 und dem Führungszapfen 21 erstreckt. Der schmale Durchtritt 34 ist, ebenso wie die im Vergleich breitere Kulisse 29, zur Seite in Richtung des Pfeils P offen, und weist daher in etwa die Gestalt eines Langlochs auf. Auf diese Weise können Kulissenstein 28 und Schraube 30 in Richtung des Pfeils P nach außen aus dem Bremsträger 3 herausgeführt werden. Der Vorteil dieser konstruktiven Lösung wird nachfolgend anhand der Fign. 9a, 9b und 9c erläutert. Diese zeigen das Abnehmen des Bremssattels 31 von dem Bremsträger 3.

Zunächst wird, wie dies die Fign. 9a und 9b zeigen, das an dem Ort A angeordnete erste Aufnahmeelement des Bremssattels 31 vollständig gelöst, d.h. der dort angeordnete Führungszapfen 21 wird vollständig herausgeschraubt. Die Ausgestaltung der Gewindebuchse bei A ist vorzugsweise wie in Fig. 6 oder in Fig. 7 dargestellt.

Gemäß Fig. 9b lässt sich der Bremssattel 31 dann um B herum etwas verschwenken. Zugleich kann die noch bestehende Verbindung bei B durch das anhand der Fig. 10 beschriebene seitliche Herausschieben gelöst werden, ohne die Verschraubung bei B ganz zu entfernen. Der Bremssattel 31 ist dann vollständig frei, wie dies Fig. 9 c zeigt. Bei B ist in den Kulissenstein 28 noch eine Gewindebuchse eingesetzt. Diese ist vorzugsweise wie in Fig. 6 dargestellt gestaltet. Das Anlösen der Verschraubung kann dann über den an der Gewindebuchse des Kulissensteins 28 angeformten Mehrkant (entsprechend dem Mehrkant 27 in Fig. 6) erfolgen.

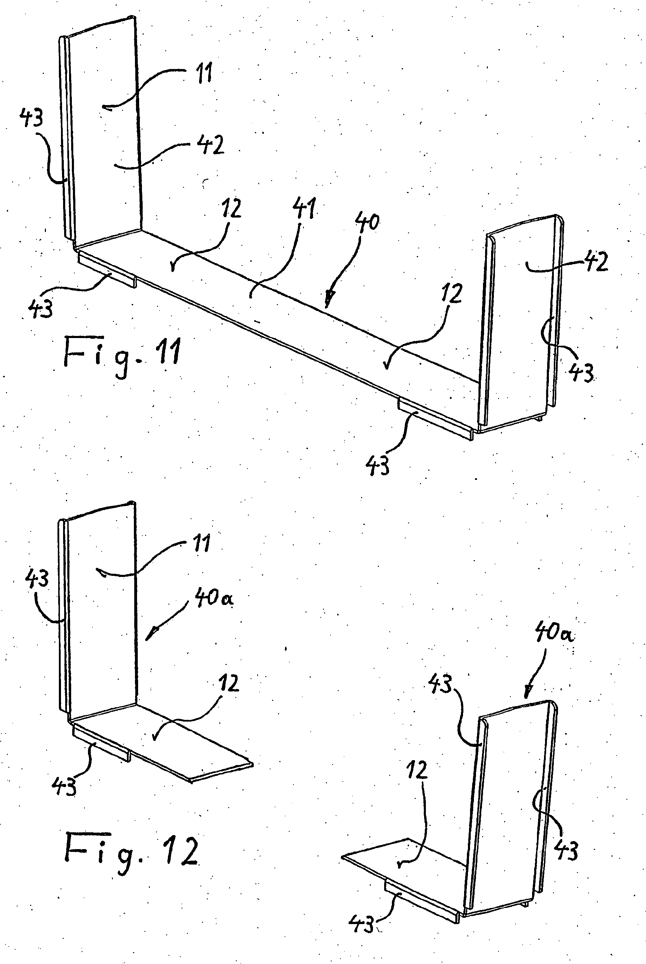

Fig. 11 zeigt ein in den Belagschacht 10 des Bremsträgers 3 einsetzbares Verschleißblech 40 aus z.B. Federstahl. Das Verschleißblech 40 ist einstückig und setzt sich aus einem zentralen Stegblech 41 und zwei hierzu im wesentlichen rechtwinklig angeordneten Schenkelblechen 42 zusammen. Sowohl im Bereich des Stegblechs 41 wie auch im Bereich der Schenkelbleche 42 sind rechtwinklig nach außen abstehende Abkantungen angeformt. Hergestellt wird das Verschleißblech 40 aus einem einzigen Blechstück durch mehrfaches Abkanten. Zur Erzielung einer gewissen Vorspannung kann es vorteilhaft sein, wenn die beiden Schenkelbleche 42 nicht exakt parallel zueinander verlaufen, sondern sich nach außen hin geringfügig voneinander entfernen. Beim Einsetzen des Verschleißbleches 40 in den Belagschacht 10 des Bremsträgers 3 legen sich die Schenkelbleche 42 dann unter geringer Federwirkung an die entsprechenden Innenflächen des Belagschachts. Die Innenflächen des Verschleißblechs 40 sind glattflächig und bilden auf diese Weise reibungsarme radiale und tangentiale Abstütz- und Führungsflächen 11, 12 für den darin eingesetzten Bremspad. Hierbei stützen sich die Abkantungen 43 von außen gegen die entsprechenden Flachseiten 25, 26 des Bremsträgers 3 ab, so dass sie Mittel darstellen, um das Verschleißblech 40 in dem Belagschacht 10 zu fixieren, wodurch das Verschleißblech darin nicht verrutschen kann.

Statt eines einzigen Verschleißbleches können auch zwei Verschleißbleche in Form jeweils eines Winkels.verwendet werden. Fig. 12 zeigt zwei solche, in die Winkel des Belagschachts 10 einsetzbare Verschleißbleche 40a.

An dem Verschleißblech 40 können Vorsprünge angeformt sein, welche in korrespondierend gestaltete Aussparungen in der Umfangskontur des Bremspads hineinpassen. Dadurch lässt sich das Einsetzen eines für die Bremse nicht bestimmten Bremspads oder eines richtigen Bremspads jedoch in falscher Einbaulage in den Belagschacht verhindern. Einzelheiten zu einer solcherart Kodierung der Bremspads sind ausführlich in der europäischen Patentanmeldung EP 1 473 481 A1 beschrieben.

Von Vorteil sind die beschriebenen Verschleißbleche, da im Falle des sich mit der Zeit einstellenden Verschleißes der Führungsflächen des Belagschachts 10 nicht der komplette Bremsträger 3, an dem der Belagschacht ausgebildet ist, getauscht werden muss. Vielmehr reicht es aus, die Verschleißbleche 40, 40a auszutauschen. Dies kann im Rahmen der regelmäßigen Wartungsarbeiten an der Scheibenbremse erfolgen, z.B. bei jedem dritten Wechsel der Bremspads.

**Bezugszeichen**

| | | | |
|---|---|---|---|
| 1 | Achskörper | 40a | Verschleißblech |
| 1a | Achsschenkel | 41 | Stegblech |
| 2 | Schweißnaht | 42 | Schenkelblech |
| 3 | Bremsträger | 43 | Abkantung |
| 3a | Bremsträgerteil | | |
| 3b | Bremsträgerteil | A | Befestigungsort |
| 4 | Öffnung | B | Befestigungsort |
| | | P | Pfeil |
| 5a | Fläche | w1 | Umschließungswinkel |
| 5b | Fläche | w2 | Winkel |
| 5c | Fläche | | |
| 6 | Mittelachse | | |
| 10 | Belagschacht | | |
| 11 | (radiale) Führungsfläche | | |
| 12 | (tangentiale) Führungsfläche | | |
| 12a | Einsenkung | | |
| 16a | Ausnehmung | | |
| 16b | Ausnehmung | | |
| 16c | Ausnehmung | | |
| 20 | Gewinde | | |
| 21 | Führungszapfen, Aufnahmeelement | | |
| 21a | Lagerfläche | | |
| 22 | Gewindebuchse | | |
| 22a | Kragen | | |
| 23 | Bohrung | | |
| 24 | Gewinde | | |
| 25 | Flachseite des Bremsträgers | | |
| 26 | Flachseite des Bremsträgers | | |
| 27 | Mehrkant | | |
| 28 | Kulissenstein | | |
| 29 | Kulisse | | |
| 30 | Schraube | | |
| 31 | Bremssattel | | |
| 34 | Durchtritt | | |
| 40 | Verschleißblech | | |

## Patentansprüche

1. Scheibenbremse mit einem gegenüber einem Achskörper (1) fest angeordneten Bremsträger (3) mit daran angeordneten Aufnahmeelementen (21) für die Befestigung und schwimmende Lagerung eines Bremssattels,
wobei der Bremsträger (3) einen Belagschacht (10) zur Aufnahme eines gegen eine Bremsscheibe der Scheibenbremse anliegenden Bremspads aufweist und jeder weitere Bremspad in einer Aufnahme des Bremssattels angeordnet ist,
wobei an dem Belagschacht (10) Führungsflächen (11, 12) zur radialen und tangentialen Führung des Bremspads angeordnet sind,
und wobei der Bremsträger (3) direkt an dem Achskörper (1) angeordnet ist und sich im Wesentlichen quer hierzu erstreckt,
**dadurch gekennzeichnet,**
**dass** der Bremsträger (3) als eine ebene Platte, vorzugsweise eine flache Stahlplatte, ausgebildet ist, und dass zur Austauschbarkeit der an dem Belagschacht (10) angeordneten Führungsflächen (11, 12) mindestens ein innen an dem Belagschacht (10) angeordnetes Verschleißblech (40, 40a) vorgesehen ist, an dem eine radiale (11) und eine tangentiale (12) Führungsfläche für den Bremspad ausgebildet ist.

2. Scheibenbremse nach Anspruch 1, **dadurch gekennzeichnet, dass** der Achskörper (1) einen quadratischen Querschnitt aufweist.

3. Scheibenbremse nach Anspruch 1 oder Anspruch 2, **dadurch gekennzeichnet, dass** der Bremsträger (3) zur Befestigung auf dem Achskörper eine maulförmige Öffnung (4) und einen auf die Mittelachse (6) des Achskörpers (1) bezogenen Umschließungswinkel (w1) von weniger als 360 Grad aufweist.

4. Scheibenbremse nach Anspruch 3, **gekennzeichnet durch** einen Umschließungswinkel (w1) von weniger als 300 Grad.

5. Scheibenbremse nach Anspruch 3, **gekennzeichnet durch** einen Umschließungswinkel (w1) von etwa 270 Grad.

6. Scheibenbremse nach einem der Ansprüche 3 bis 5, **dadurch gekennzeichnet, dass** die Öffnung (4) einen Rechteckquerschnitt mit zwei einander gegenüberliegenden Flächen (5a, 5b) beschreibt.

7. Scheibenbremse nach Anspruch 6, **dadurch gekennzeichnet, dass** die Öffnung (4) U-förmig gestaltet ist.

8. Scheibenbremse nach Anspruch 6 oder 7, **dadurch gekennzeichnet, dass** die einander gegenüberliegenden Flächen (5a, 5b) der Öffnung (4) schräg zu den Führungsflächen (11, 12) des Belagschachts (10) angeordnet sind.

9. Scheibenbremse nach Anspruch 8, **dadurch gekennzeichnet, dass** die einander gegenüberliegenden Flächen (5a, 5b) der Öffnung (4) einen Winkel (w2) zwischen 10 und 30 Grad zu den radialen Führungsflächen (11) des Belagschachts (10) aufweisen.

10. Scheibenbremse nach Anspruch 1, **dadurch gekennzeichnet, dass** der Bremsträger (3) aus parallel geschichteten Blechen zusammengesetzt ist.

11. Scheibenbremse nach einem der vorangehenden Ansprüche, **dadurch gekennzeichnet, dass** sich der Bremsträger (3) aus zwei innerhalb derselben Ebene angeordneten Bremsträgerteilen (3a, 3b) zusammensetzt, die beide direkt an dem Achskörper (1) befestigt sind.

12. Scheibenbremse nach einem der vorangehenden Ansprüche, **dadurch gekennzeichnet, dass** der Bremsträger (3; 3a, 3b) mit dem Achskörper (1) verschweißt ist.

13. Scheibenbremse nach Anspruch 12, **dadurch gekennzeichnet, dass** der Bremsträger (3; 3a, 3b) nur entlang gerade verlaufender Verbindungsabschnitte mit dem Achskörper verschweißt ist.

14. Scheibenbremse nach einem der vorangehenden Ansprüche, **dadurch gekennzeichnet, dass** der Bremsträger (3) auf mindestens einer seiner beiden Seiten (25, 26) mit gewichtsreduzierenden Ausnehmungen (16a,16b,16c) versehen ist.

15. Scheibenbremse nach einem der vorangehenden Ansprüche, **dadurch gekennzeichnet, dass** der Bremsträger (3) mit gewichtsreduzierenden Öffnungen versehen ist.

16. Scheibenbremse nach Anspruch 1, **gekennzeichnet durch** an dem Verschleißblech (40, 40a) angeformte Mittel (43) zum Fixieren des Verschleißblechs an dem Belagschacht (10), vorzugsweise in Gestalt von sich bis über die Flachseiten (25, 26) des Bremsträgers (3) erstreckenden Abkantungen.

17. Scheibenbremse nach Anspruch 1 oder 16, **gekennzeichnet durch** einen an dem Verschleißblech (40, 40a) angeformten Vorsprung, welcher in eine zu dem Vorsprung korrespondierende Aussparung in der Umfangskontur des Bremspads eingreift.

18. Scheibenbremse nach einem der vorangehenden Ansprüche, **dadurch gekennzeichnet, dass** die Aufnahmeelemente für den Bremssattel in Gewinde (24) eingeschraubte Führungszapfen (21) sind, wobei sich die Gewinde (24) an auswechselbar in Bohrungen (23) des Bremsträgers (3) eingesetzten Gewindebuchsen (22) befinden.

19. Scheibenbremse nach Anspruch 18, **dadurch gekennzeichnet, dass** die Bohrungen (23) in dem Bremsträger (3) in Achsenrichtung symmetrisch sind.

20. Scheibenbremse nach einem der Ansprüche 1 bis 17, **gekennzeichnet durch** zwei Aufnahmeelemente in Gestalt jeweils eines in ein Gewinde (24) eingeschraubten Führungszapfens (21), wobei sich jedes der beiden Gewinde (24) in einem auswechselbar in den Bremsträger (3) eingesetzten Gewindeeinsatz (22;28) befindet, und einer der beiden Gewindeeinsätze ein in Richtung der Erstreckung des Bremsträgers (3) in den Bremsträger einsetzbarer Kulissenstein (28) ist.

## Claims

1. A disc brake with a brake carrier (3) arranged fixed with respect to an axle beam (1) and having receiving elements (21) fixed on it for the fastening and floating mounting of a brake calliper,
wherein the brake carrier (3) has a lining cavity (10) for receiving a brake pad resting against a disc of the disc brake and each further brake pad is arranged in a receiving means of the brake calliper,
wherein guide faces (11, 12) are arranged on the lining cavity (10) for the radial and tangential guidance of the brake pad,
and wherein the brake carrier (3) is arranged directly on the axle beam (1) and extends substantial transversely thereto,
**characterized in that**
the brake carrier (3) is designed in the form of a planar plate, preferably in the form of a flat steel plate, and at least one wear plate (40, 40a), which is arranged on the inside of the lining cavity (10) and on which are formed a radial guide face (11) and a tangential guide face (12) for the brake pad, is provided for the interchangeability of the guide faces (11, 12) arranged on the lining cavity (10).

2. A disc brake according to Claim 1, **characterized in that** the axle beam (1) has a square cross-section.

3. A disc brake according to Claim 1 or Claim 2, **characterized in that** for fastening to the axle beam the brake carrier (3) has a jaw-shaped opening (4) and an enclosing angle (w1) of less than 360° relative to the centre axis (6) of the axle beam (1).

4. A disc brake according to Claim 3, **characterized by** an enclosing angle (w1) of less than 300°.

5. A disc brake according to Claim 3, **characterized by** an enclosing angle (w1) of approximately 270°.

6. A disc brake according to any one of Claims 3 to 5, **characterized in that** the opening (4) has a rectangular cross-section with two mutually opposite faces (5a, 5b).

7. A disc brake according to Claim 6, **characterized in that** the opening (4) is made U-shaped.

8. A disc brake according to Claim 6 or 7, **characterized in that** the mutually opposite faces (5a, 5b) of the opening (4) are arranged obliquely to the guide faces (11, 12) of the lining cavity (10).

9. A disc brake according to Claim 8, **characterized in that** the mutually opposite faces (5a, 5b) of the opening (4) form an angle (w2) of between 10 and 30° to the radial guide faces (11) of the lining cavity (10).

10. A disc brake according to Claim 1, **characterized in that** the brake carrier (3) is formed from plates layered parallel.

11. A disc brake according to any one of the preceding Claims, **characterized in that** the brake carrier (3) is formed from two brake carrier parts (3a, 3b) which are situated in the same plane and which are both fastened directly to the axle beam (1).

12. A disc brake according to any one of the preceding Claims, **characterized in that** the brake carrier (3; 3 a, 3b) is welded to the axle beam (1).

13. A disc brake according to Claim 12, **characterized in that** the brake carrier (3; 3a, 3b) is welded to the axle beam only along connecting portions extending in a straight line.

14. A disc brake according to any one of the preceding Claims, **characterized in that** the brake carrier (3) is provided with weight-reducing recesses (16a, 16b, 16c) on at least one of its two sides (25, 26).

15. A disc brake according to any one of the preceding Claims, **characterized in that** the brake carrier (3) is provided with weight-reducing openings.

16. A disc brake according to Claim 1, **characterized by** means (43) formed integrally on the wear plate (40, 40a) for fixing the wear plate to the lining cavity (10), preferably in the form of folds extending over the flat sides (25, 26) of the brake carrier (3).

17. A disc brake according to Claim 1 or 16, **characterized by** a projection which is formed integrally on the wear plate (40, 40a) and which engages in a recess - corresponding to the projection - in the peripheral contour of the brake pad.

18. A disc brake according to any one of the preceding Claims, **characterized in that** the receiving elements for the brake calliper are guide pins (21) screwed into threads (24), wherein the threads (24) are present on threaded bushes (22) inserted into bores (23) in the brake carrier (3) in an interchangeable manner.

19. A disc brake according to Claim 18, **characterized in that** the bores (23) in the brake carrier (3) are symmetrical in the axial direction.

20. A disc brake according to any one of Claims 1 to 17, **characterized by** two receiving elements in each case in the form of a guide pin (21) screwed into a thread (24), wherein each of the two threads (24) is present in a thread insert (22; 28) inserted into the brake carrier (3) in an interchangeable manner, and one of the two thread inserts is a slide block (28) capable of being inserted into the brake carrier in the direction of the extension of the brake carrier (3).

## Revendications

1. Frein à disque comportant une chape de frein (3), qui est agencée de manière fixe par rapport à un corps axial (1) et sur laquelle sont disposés des éléments de réception (21) pour la fixation et le montage flottant d'un étrier de frein,
ladite chape de frein (3) comportant une cage pour garniture de friction (10) destinée à recevoir une plaquette de frein en appui contre un disque du frein à disque et chaque plaquette de frein supplémentaire est disposée dans un logement de l'étrier de frein,
des surfaces de guidage (11, 12) pour le guidage radial et tangentiel de la plaquette de frein étant agencées sur la cage pour garniture de friction (10),
et la chape de frein (3) étant agencée directement sur le corps axial (1) et s'étendant sensiblement transversalement à celui-ci,
**caractérisé**
**en ce que** la chape de frein (3) est réalisée sous la forme d'une plaque plane, de préférence une plaque en acier plate, et en ce que, en vue de l'interchangeabilité des surfaces de guidage (11, 12) agencées sur la cage pour garniture de friction (10), il est prévu au moins une plaque d'usure (40, 40a), qui est disposée à l'intérieur sur la cage pour garniture de friction (10) et sur laquelle sont réalisées une surface de guidage radiale (11) et une surface de guidage tangentielle (12) pour la plaquette de frein.

2. Frein à disque selon la revendication 1, **caractérisé en ce que** le corps axial (1) possède une section transversale carrée.

3. Frein à disque selon la revendication 1 ou la revendication 2, **caractérisé en ce que** la chape de frein (3), en vue de sa fixation sur le corps axial, comporte une ouverture (4) en forme de mâchoire et un angle de contact (w1) par rapport à l'axe médian (6) du corps axial (1), qui mesure moins de 360 degrés.

4. Frein à disque selon la revendication 3, **caractérisé par** un angle de contact (w1) inférieur à 300 degrés.

5. Frein à disque selon la revendication 3, **caractérisé par** un angle de contact (w1) de 270 degrés environ.

6. Frein à disque selon l'une quelconque des revendications 3 à 5, **caractérisé en ce que** l'ouverture (4) définit une section transversale rectangulaire avec deux surfaces (5a, 5b) opposées l'une à l'autre.

7. Frein à disque selon la revendication 6, **caractérisé en ce que** l'ouverture (4) est configurée en forme de U.

8. Frein à disque selon la revendication 6 ou 7, **caractérisé en ce que** les surfaces (5a, 5b) opposées l'une à l'autre de l'ouverture (4) sont disposées en oblique par rapport aux surfaces de guidage (11, 12) de la cage pour garniture de friction (10).

9. Frein à disque selon la revendication 8, **caractérisé en ce que** les surfaces (5a, 5b) opposées l'une à l'autre de l'ouverture (4) forment avec les surfaces de guidage (11) de la cage pour garniture de friction (10) un angle (w2) entre 10 et 30 degrés.

10. Frein à disque selon la revendication 1, **caractérisé en ce que** la chape de frein (3) est constituée de tôles empilées parallèlement.

11. Frein à disque selon l'une quelconque des revendications précédentes, **caractérisé en ce que** la chape de frein (3) est constituée par deux parties (3a, 3b) disposées à l'intérieur du même plan et fixées toutes deux au corps axial (1).

12. Frein à disque selon l'une quelconque des revendications précédentes, **caractérisé en ce que** la chape de frein (3 ; 3a, 3b) est soudée au corps axial (1).

13. Frein à disque selon la revendication 12, **caractérisé en ce que** la chape de frein (3 ; 3a, 3b) est soudée au corps axial uniquement le long de zones d'assemblage droites.

14. Frein à disque selon l'une quelconque des revendications précédentes, **caractérisé en ce que** la chape de frein (3), sur au moins l'un de ses deux côtés (25, 26), comporte des évidements (16a, 16b, 16c) destinés à diminuer le poids.

15. Frein à disque selon l'une quelconque des revendications précédentes, **caractérisé en ce que** la chape de frein (3) comporte des ouvertures destinées à diminuer le poids.

16. Frein à disque selon la revendication 1, **caractérisé par** des moyens (43) formés sur la plaque d'usure (40, 40a) pour fixer la plaque d'usure sur la cage pour garniture de friction (10), de préférence sous la forme de pliures qui s'étendent jusqu'au-delà des côtés plats (25, 26) de la chape de frein (3).

17. Frein à disque selon la revendication 1 ou 16, **caractérisé par** une saillie, qui est formée sur la plaque d'usure (40, 40a) et qui s'engage dans un évidement correspondant à la saillie dans le contour périphérique de la plaquette de frein.

18. Frein à disque selon l'une quelconque des revendications précédentes, **caractérisé en ce que** les éléments de réception pour l'étrier de frein sont des tenons de guidage (21) vissés dans des filetages (24), lesdits filetages (24) se situant sur des douilles filetées (22) montées de manière amovible dans des forures (23) de la chape de frein (3).

19. Frein à disque selon la revendication 18, **caractérisé en ce que** les forures (23) dans la chape de frein (3) sont symétriques dans le sens axial.

20. Frein à disque selon l'une quelconque des revendications 1 à 17, **caractérisé par** deux éléments de réception, chacun sous la forme d'un tenon de guidage (21) vissé dans un filetage (24), chacun des deux filetages (24) se situant dans un insert fileté (22 ; 28) monté de manière amovible dans la chape de frein (3), et l'un des deux inserts filetés étant un coulisseau (28) pouvant être mis en place dans la chape de frein, dans la direction de l'extension de la chape de frein (3).
